# EUROPEAN PATENT SPECIFICATION

(11) **EP 2 939 933 B1**
(45) Date of publication and mention of the grant of the patent: **08.01.2020**
(21) Application number: 15165868.9
(22) Date of filing: 30.04.2015
(51) Int. Cl.: B64F 5/00, B23Q 3/18, B23Q 1/03

(54) **MODULAR STANCHION SYSTEM**
MODULARES STÄNDERSYSTEM
SYSTÈME DE POTEAU MODULAIRE

(30) Priority: 30.04.2014 US 201414265946
(43) Date of publication of application: 04.11.2015
(73) Proprietor: The Boeing Company, Chicago, IL 60606-1596 (US)
(72) Inventor: Larson, Kim Marie, Chicago, IL Illinois 60606-2016 (US); Eng, Raymond Cho, Chicago, IL Illinois 60606-2016 (US); Munk, Clayton Lynn, Chicago, IL Illinois 60606-2016 (US); Day, Dan Dresskell, Chicago, IL Illinois 60606-2016 (US); Davis, Gordon Dale, Chicago, IL Illinois 60606-2016 (US)
(74) Representative: Boult Wade Tennant LLP

(56) References cited:
- EP-A2- 2 604 524
- US-A1- 2004 040 154

## Description

### FIELD

The present disclosure relates generally to configurations, systems, and methods for supporting relatively large, elongated structures. More specifically, certain aspects of the disclosure relate to configurations, systems, and methods for manufacturing, maintenance, inspection, testing, and evaluation of aircraft wing assembles, wherein stanchions of readily variable heights may be employed.

### BACKGROUND

In the manufacture of elongated components, and in particular aircraft wings, support stands (also referred to as stanchions) of differing heights may be required. This may be the case with aircraft wings in particular, wherein the thickness of an aircraft wing may change considerably, moving from the root of the wing (where the wing attaches to an aircraft fuselage) to the tip of such wing. To adequately support the wing, multiple stanchions are typically used along the length of both sides of the wing. These stanchions may be required to each be of a custom height in order to support a particular location of a specific model of wing, depending on a number of factors, including, without limitation, the weight to be supported, the design tolerances, the type and amount of work and/or inspection to be done, etc. Further, support stands or stanchions may be required which, in addition to support, can provide proper alignment of an elongated component during assembly or transport. In some cases, it may be required that a support stand function as a jig in addition to support functions. Additionally, operability within a range of alignment configurations may be required. Given the variety of wing models which may require manufacture, maintenance, inspection, testing, evaluation, etc., the construction of stanchions that are custom-made for each of the various wing models and/or configurations can be expensive, labor intensive, and can adversely bear on productions schedules.

Further, transport of elongated components, such as aircraft wings, may require adjustment of the height of support stands in order to compensate for changing terrain conditions beneath the stanchions. For example, movement of an elongated component across a workshop or assembly operation floor can result in load shifting during movement across uneven or unleveled floor surfaces. Load shifting of this type may, in some cases, adversely affect structural integrity of elongated components. Distribution and/or re-distribution of changing loads along the elongated structure during transit may be required, in some cases involving measurement and height/load adjustment during transit. Moreover, in some cases, transport of elongated components may require positioning and/or repositioning of the support stands along one or more axes of rotation or along one or more planes in order to compensate for deviations from predetermined positions which are desired for certain assembly operations and which, in some cases, may not be associated with load shifting.

Further limitations and disadvantages of conventional and traditional approaches to the support of wings and other elongated structures may become apparent to one of skill in the art, through comparison of such systems with the teachings and examples set forth in the present disclosure.

EP 2604524 A2, in accordance with its abstract, states a method and apparatus for manufacturing a structure. A part for the structure may be supported on a plurality of mobile fixtures configured to control an orientation of the part. The part for the structure may be moved using the plurality of mobile fixtures to a number of stations for performing a number of operations for manufacturing the structure using the part. The plurality of mobile fixtures may be configured to move in a coordinated manner and substantially maintain a desired orientation for the part while moving the part to a station in the number of stations. The number of operations for manufacturing the structure may be performed at the number of stations while the plurality of mobile fixtures supports the part.

### SUMMARY

It would be desirable to provide systems, methods, and apparatuses that address the issues discussed above, as well as other potential issues, and also to provide a modular stanchion system which is readily reconfigurable for production systems of a variety of aircraft wing models. Moreover, it would be beneficial to provide configurations, systems, and methods for supporting aircraft wings and/or other elongated structures during manufacturing, maintenance, inspection, testing, and/or evaluation through use of stanchions of readily adaptable heights. Additionally, it would be beneficial to provide configurations, systems, and methods for providing proper alignment of an aircraft wing and/or other elongated structure during such operations through use of stanchions of readily adaptable heights.

Briefly, an example implementation of a modular stanchion system as disclosed herein may include a predetermined or preselected height upper section having an actuation system, controls and a movable slide table together with one or more lower base sections of preselected heights. This arrangement allows for quickly configurable and/or reconfigurable stanchions for a variety of aircraft wing models or other elongated structures, in that the overall stanchion height can be changed by replacing the lower base with another lower base of a different height. Wing attachments for connecting the stanchion system to the wing can be varied as necessary or desired by attaching an arm to the slide table on the upper section. A modular movable platform may be provided that is also of a predetermined size and/or height for use in connection with one or more other such modular movable platforms for supporting the stanchions. Further example implementations of a modular stanchion system as disclosed herein may comprise load cells connected thereto, with each load cell automatically determining the load placed on one arm. Multiple load cells can be placed in communication with a control system capable of coordinating the operation of load cells and to provide height adjustments to arms on the upper sections of the stanchions.

Accordingly, configurations, systems, and method are disclosed for facilitating such support of wings and/or other large elongated structures.

There is described herein an apparatus for supporting a wing assembly at a wing assembly support height relative to a support surface. The apparatus comprises: at least one movable platform having a first height; a plurality of base sections, each having a different predetermined height with respect to one another; a plurality of wing assembly support sections, wherein each wing assembly support section corresponds to a respective one of the base sections; and a wing assembly connector connected to each of the plurality of wing assembly support sections; at least one wing assembly connector being configured to be movable in a first plane and a second plane generally perpendicular with respect to the first plane; each of the wing assembly support sections defining a bottom and the wing assembly connector being at a second height from the bottom; at least one movable platform and at least one wing assembly connector being configured such that the aggregate of the first height and the second height is less than at least one of the wing assembly support heights and such that the difference between the aggregate of the first height and the second height and the wing assembly support height defines a differential height; at least one of the multiple base sections being of a predetermined height approximating the differential height; the at least one of the base sections being of a predetermined height approximating the differential height being carried on the movable platform; at least one of the wing assembly support sections carried on at least one of the multiple base sections being of a predetermined height approximating the differential height; at least two of the wing assembly connectors each including an arm, and wherein the first plane is generally perpendicular to the support surface and the second plane is generally parallel to the support surface; at least two of the wing assembly connectors each having a respective load cell connected thereto, each load cell being configured to automatically determine the load placed on one arm; at least two of the wing assembly connectors each having a respective metrology device connected thereto, each metrology device being configured to automatically determine positional data for one connector; and a control system in communication with each load cell and each metrology device.

There is described herein a method for supporting a wing assembly at a wing assembly support height relative to a support surface, the method comprising the steps of: providing at least one wing assembly; providing at least one movable platform having a first height; providing a plurality of base sections, each having a different predetermined height with respect to one another; providing a plurality of wing assembly support sections wherein each wing assembly support section corresponds to a respective one of the base sections, and a wing assembly connector movable in a first plane and a second plane generally perpendicular with respect to the first plane on each of the wing assembly support sections, the wing assembly support section defining a bottom and the wing assembly connector being at a second height from the bottom; providing each of at least two of the wing assembly connectors with load cells connected thereto, wherein each load cell automatically determines load placed on one connector; providing each of at least two of the wing assembly connectors with metrology devices connected thereto, wherein each metrology device automatically determines positional data for one connector; providing a control system in communication with the load cells and the metrology devices; aggregating the first height of the movable platform and the second height of the wing assembly connector from the bottom of the wing assembly support section; determining a differential height by comparing the aggregated first height and second height to the wing assembly support height; selecting one of the multiple base sections of a predetermined height approximating the differential height and positioning the selected one of the multiple base sections upon the platform; positioning the wing assembly support section on top of the selected one of the multiple base sections; and connecting the wing assembly connector to the wing assembly for supporting the wing assembly.

In other exemplary aspects of the disclosure, configurations, systems, and methods for supporting aircraft wings and/or other elongated structures during manufacturing, maintenance, inspection, testing, and/or evaluation through use of a stanchion including an upper section of a generally predetermined, fixed height having an actuation system, controls, and a movable table in combination with a base section selected from a collection of base sections, each being of a different, predetermined height.

The features, functions and advantages discussed herein may be achieved independently in various examples or may be combined in yet other exemplary aspects of the disclosure, the further details of which may be seen with reference to the following description and drawings.

### BRIEF DESCRIPTION OF THE DRAWINGS

Having thus described exemplary aspects of the disclosure in general terms, reference will now be made to the accompanying drawings, which are not necessarily drawn to scale, and wherein:
FIG. 1 illustrates a side elevational view of an aircraft wing assembly supported by example implementations of a system of modular stanchions;
FIG. 2 is a perspective view of an example modular movable platform contemplated by the present disclosure;
FIG. 3 is a perspective view of an example stanchion and an example modular movable platform contemplated by the present disclosure;
FIGs. 4A and 4B are sectional views taken along lines 2 -- 2 of FIG. 3 and an example upper stanchion moving horizontally between first and second positions with respect to a base section;
FIG. 5 is a sectional view similar to FIGs. 4A and 4B illustrating an example actuator system of an upper stanchion moving between first and second positions; and
FIG. 6 is a plan view of an example stanchion and an example modular movable platform contemplated by the present disclosure;
FIG. 7 is a flow diagram of aircraft production and service methodology; and
FIG. 8 is a block diagram of an aircraft.

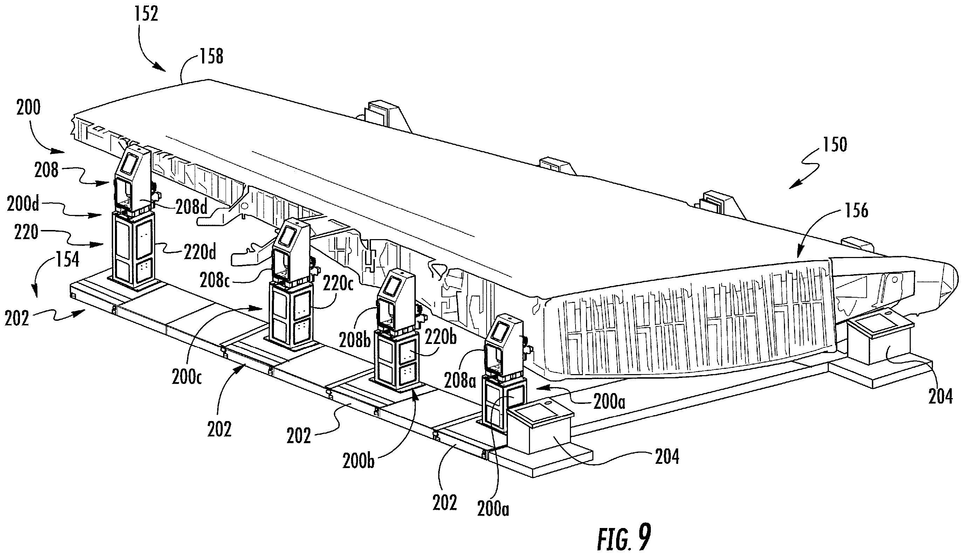

FIG. 9 illustrates a side elevational view of an aircraft wing assembly supported by an example apparatus for supporting a wing assembly.

### DETAILED DESCRIPTION

Examples of the present disclosure will now be described more fully hereinafter with reference to the accompanying drawings, in which some, but not all examples of the disclosure are shown. Indeed, various exemplary aspects of the disclosure may be embodied in many different forms and should not be construed as limited to the examples set forth herein. Rather, these examples are provided so that this disclosure will be thorough and complete and will fully convey the scope of the disclosure to those skilled in the art. Like reference numerals refer to like elements throughout.

As used herein, "and/or" means any one or more of the items in the list joined by "and/or." As an example, "x and/or y" means any element of the three-element set {(x), (y), (x, y)}. As another example, "x, y, and/or z" means any element of the seven-element set {(x), (y), (z), (x, y), (x, z), (y, z), (x, y, z)}. Further, as used herein, the term "exemplary" means serving as a non-limiting example, instance, or illustration. Moreover, as used herein, the term, for example, or "e.g.," introduces a list of one or more non-limiting examples, instances, or illustrations.

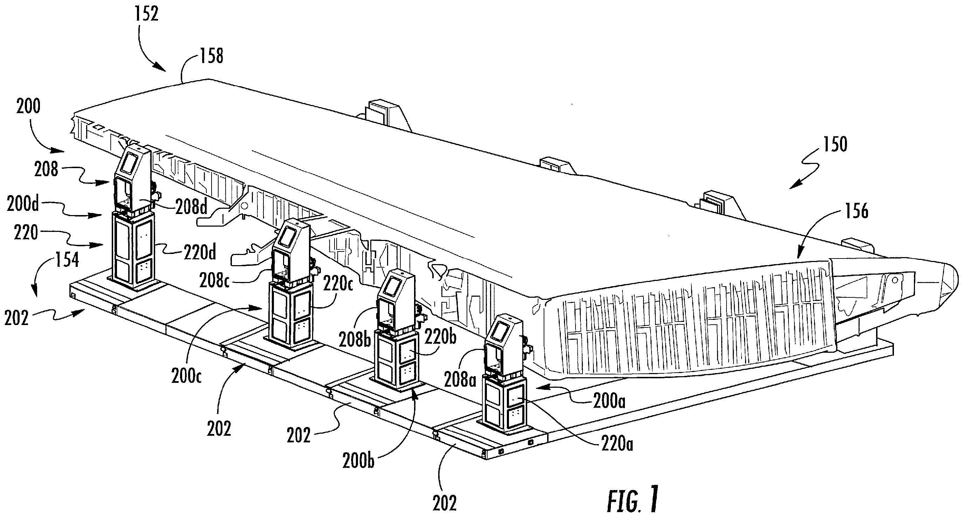

Generally, in one example implementation of the present disclosure, a system is provided for supporting a wing assembly at a wing assembly support height relative to a support surface shown in FIG. 1, the subject matter described herein relates generally to a horizontal build line, generally 150, for a relatively large, elongated structure, such as an aircraft wing assembly, or simply, "wing," generally 152. Modular tooling stands, or stanchions, generally 200, can be mounted to a support surface, such as the floor, generally 154, or to modular rolling platforms, generally 202, which facilitate support wing assembly 152, such as in an assembly line and/or for maintenance, inspection, testing, and evaluation purposes. Platform 202 is of a predetermined height, which could be approximately 12 inches or any other suitable height. Stanchions 200 may allow a manufacturer to relatively quickly configure and/or reconfigure production system of various aircraft model wing sizes and configurations and/or other elongated structures.

As shown in FIGs. 1, 3, 4A, 4B, and 5, each stanchion 200 may include a wing assembly support section, such as a generally predetermined-height adjustable upper section, generally 208, which may contain components and systems, such as an arm configuration, generally 210, a movable slide table 214, and an actuation system, generally 216. A lower, base section, generally 220, is of a predetermined height and may be of construction of similar width and depth dimensions as compare to other lower sections shown herein as exemplary implementations, and also, could be one of a number of such base sections of varying heights, each being readily interchangeable with one another and fully compatible with an upper section 208 and a modular rolling platform, generally 202. This arrangement allows for the same overall stanchion design to be used in the assembly of wings with varying size/height requirements. Modular rolling platforms 202 are of a predetermined size and configuration, thereby allowing for generally interchangeable use with respect to a base section 220 and in stanchions 200, generally.

FIG. 1 illustrates, in particular, four stanchions (200a, 200b, 200c, 200d) each being carried on a platform 202. Each stanchion 200 includes a base section 220a, 220b, 220c, and 220d, respectively, and an upper section 208a, 208b, 208c, and 208d, respectively. Stanchion 200a is positioned near the root, generally 156, of wing 152 which is the thickest portion of wing 152. Stanchions 200b, 200c and 200d are spaced progressively further outwardly with respect to wing 152 and serve to support wing 152 as wing 152 is maintained, inspected, tested, evaluated, etc. Stanchion 200d is positioned furthermost outwardly with respect to root 156 of wing 152, and because the distance from floor 154 to a support portion of wing 152 increases as one moves from root 156 to tip 158 of wing 152, for support purposes, stanchion 200d is of a greater height from floor 154 than is stanchion 200a. However, each of stanchions 200a and 200d include a generally interchangeable upper section, 208a and 208d, respectively, with each of upper sections 200a, 200d being of substantially the same height as one another. Each of stanchions 200a and 200d are also mounted on a modular rolling platforms, 202a, 202d, respectively, and each of modular rolling platforms 202 also being interchangeable with one another, i.e., of substantially the same height and configuration as compared to one another.

Accordingly, in order to provide the additional elevation, or height, required by stanchion 200d, as compared to stanchion 200a, base section 220d of stanchion 200d is of greater height than base section 220a of stanchion 200a.

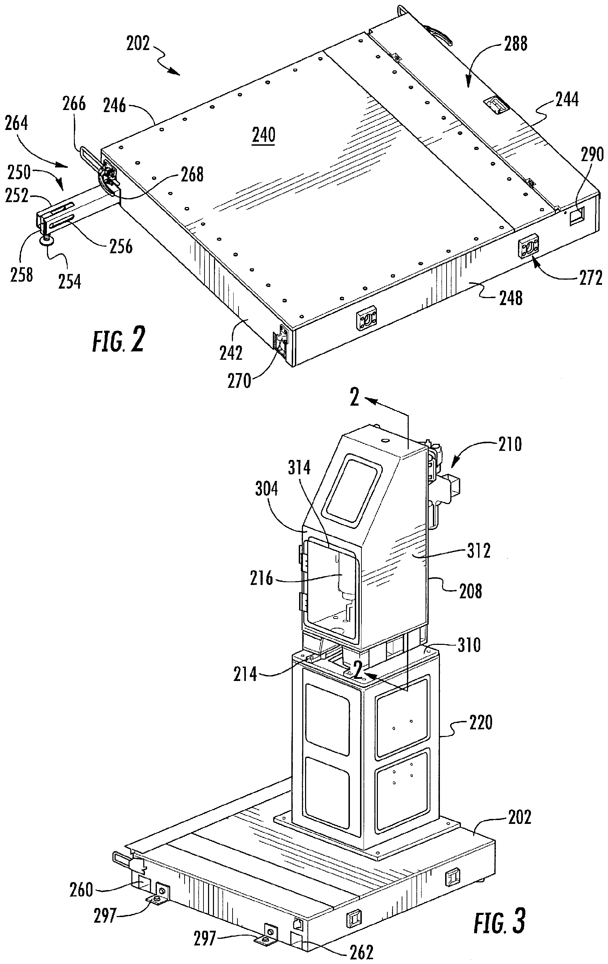

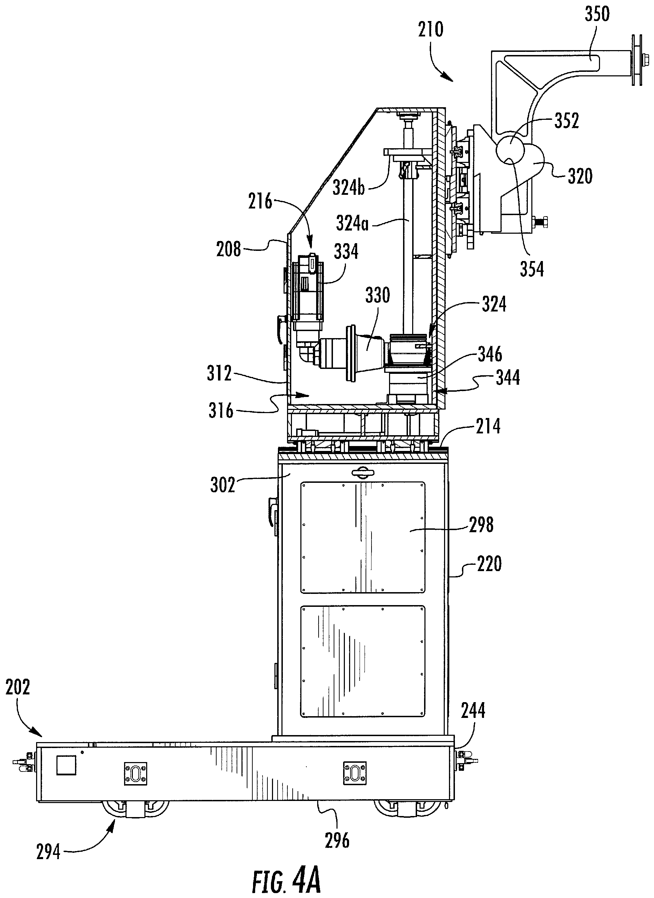

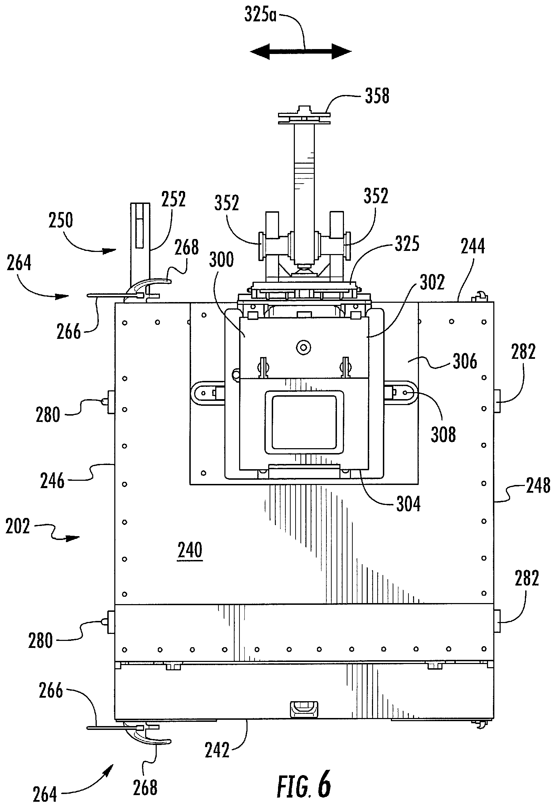

Turning to FIG. 2, modular rolling platform 202 is shown in more detail. Platform 202 includes a top surface 240 on which a base section 220 rests and is carried, such as shown in FIG. 3. Platform 202 includes a front wall 242, a rear wall 244 (FIG. 4A), a left side wall 246 (FIG. 6), and a right side wall 248. Extending from front wall 242 and/or rear wall 244 is an outrigger assembly, generally 250, that stabilizes platform 202 and which includes an arm 252 having a foot 254 configured to contact floor 154 is slidably carried for substantially rectilinear movement in slots 256 in which an upper portion 258 of foot member 242 may slide to and fro. Foot 254, in one example implementation, is threadingly connected to upper block member 258 to allow the foot to be moved upwardly and downwardly with respect to arm 252 and to ultimately, via arm 252, allow for platform 202 to be leveled, and/or generally fixed against movement with respect to floor 154. Although only one outrigger assembly 250 is shown, it is to be understood that such outrigger assemblies could be provided in one or both channels 260, 262 (FIG. 3) on front wall 242 of platform 202 and/or in rear wall 244.

FIG. 6 illustrates an example implementation for an outrigger assembly 250 is provided on rear wall 244. Front wall 242 of platform 202 also includes a clamp mechanism, generally 264, which includes a handle 268 and a loop, or clasp, 266 which is engagable with a hook member 270 on an adjacent front wall 242 of an adjacent platform 202, upon platforms 202 being placed in an adjacent relationship with respect to one another, such as is shown in FIG. 1. Referring to FIG. 2, handle 268 may be pivoted or otherwise actuated to cause loop 266 to engage and snugly clamp and/or lock loop 266 into hook member 270, similar to a buckle arrangement and/or a toggle-like manner. Similarly, rear wall 244 of platform 202 may include a loop and handle 266, 268 combination and hook member 270 (FIG. 6) for attaching to adjacent rear walls 244 of adjacent platforms 202, as shown in FIG. 1. Upon platforms 202 being placed adjacent one another, one or more loops 266 may engage one or more hook members 270, respectively, and the respective handles 268 may be actuated to cause loops 266 to snugly lock into respective hook members and thereby secure adjacent platforms together.

Platforms 202 may also include on sides 246 and 248 additional connectors 272 of selectively securing adjacent platforms 202 to one another. For example, side wall 246 of a platform 202 may include one or more male index mechanisms, connectors 280 (FIG. 6) which engage with female connectors, or index mechanisms, 282, that selectively register with one another to further secure adjacent platforms against relative movement with respect to one another, particularly against relative lateral movement with respect to one another (i.e., relative to the longitudinal dimension of wing 152).

As shown in FIG. 2, platforms 202 may further include a wire tray, generally 288, extending the length of platform 202 adjacent wall 244. Wire tray 288 is configured to carry wiring, cabling, hosing, etc. (not shown) between adjacent platforms 202, and such wiring may pass through openings 290, which may be in communication with both wire tray 288 and sides 246 and 248 (opening 290 is shown only in side 248 in the drawings). The wiring, cabling, hosing, etc. carried in wiring tray 288 may supply power, controls, pressurized air and/or hydraulic hosing, etc. to base sections 220 and/or upper sections 208 and may provide power and/or control instructions to base sections 220 and/or upper sections 208 for operations of arm configuration 210, movable slide table 214, and/or actuation system 216.

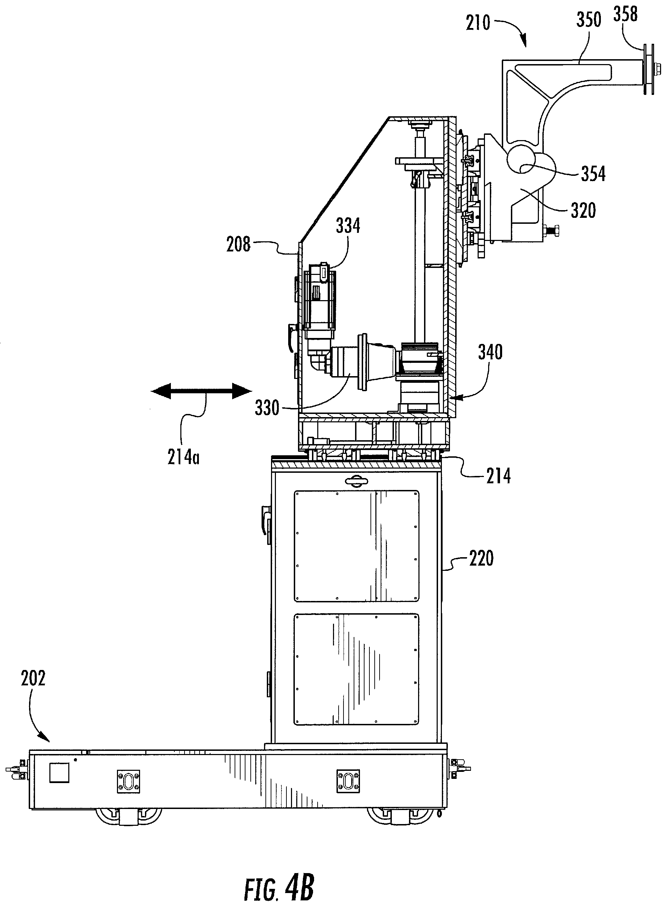

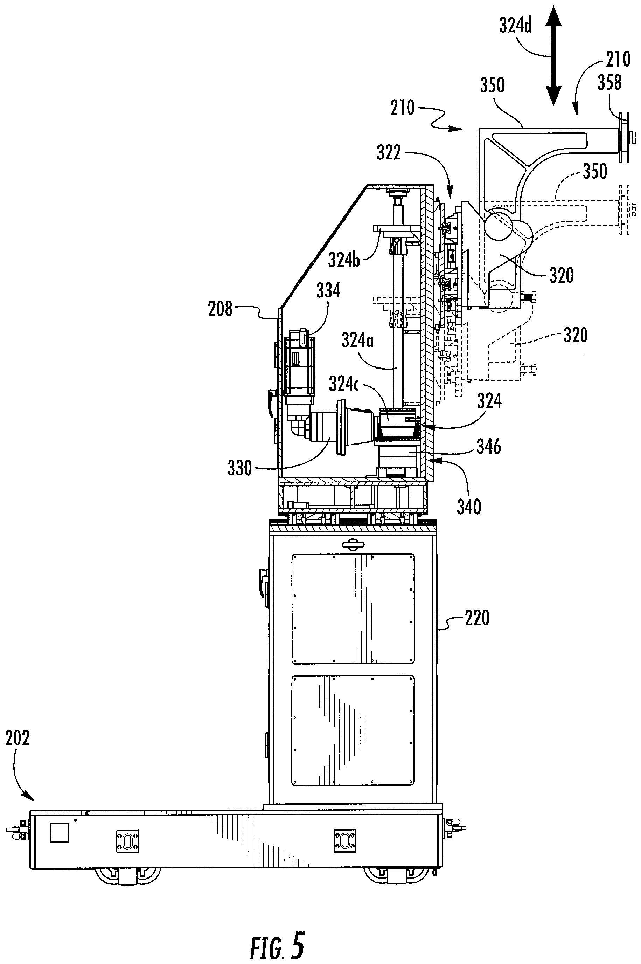

As shown in FIGs. 4A, 4B, and 5, the bottom portion of platform 202 may include castors, or wheels, generally 294, proximate the corners of the bottom portion. Wheels 294 may be selectively actuatable between a locked configuration to generally prevent platform from moving and an unlocked position for allowing platform 202 to move generally freely about the floor. Wheels 294 could also be configured to move between a retracted position above the lowermost edges 296 of the platform, such that the platform rests on the floor supported by lowermost edges 296 (to generally prevent platform from moving) and an extended, wherein wheels 294 extend below lowermost edges 296 and allow the platform to move generally freely about the floor. Brackets 297 (FIG. 3) may also be used to attach the platform to floor 154, if desired.

FIGs. 3, 4A, 4B, and 5 illustrate base section 220, which, as noted above, can be configured to be of different heights. Each base section 220 is configured to interchangeably attach to a platform 202, and, if desired, to receive wiring, cabling, hosing, etc. from wire tray 288 or otherwise. Base sections 220 are, in an example implementation, generally box-shaped, but it is to be understood that base sections 220 could be of other shapes and constructions, including, but not limited to, open frame construction, cylindrical construction (none shown), if desired. Base sections 220 may include one or more access panels and/or doors, generally, 298, on sides 300, 302 (FIG. 6), and/or on the front 304 or back thereof. One or more flanges 306 may be provided at the bottom of a base section 220 and may include holes through which fasteners 308 such as screws, bolts, quick-release fasteners (none shown) may pass to attach base section 220 to a platform 202. The upper surface 310 (FIG. 3) of base section 220 is configured to receive movable sliding table 214, which allows upper section 208 to selectively move generally rectilinearly with respect to base 220 and towards and away from wing 152. Movement of upper section 208 on the sliding table can be done manually and/or through a motorized and/or pressurized fluid configuration (not shown).

As shown in FIG. 4A, upper section 208 includes a cabinet 312 of a generally box-like configuration. Cabinet 312 includes an access door 314 (FIG. 3) which opens to a compartment 316 within cabinet 312. Inside compartment 316 is actuation system 216 which actuates arm mechanism 210, which is carried in a yoke 320. Yoke 320 is mounted on a bearing plate mechanism, generally 322, which is carried for generally rectilinear vertical movement upwardly and downwardly, such as shown in FIG. 5. An elevator device, such as a ball screw mechanism, generally 324, may be used to provided yoke 320 with such vertical movement, although it is to be understood that other mechanisms (such as pneumatic and/or hydraulic cylinders, cable mechanisms, etc.) (none shown) could also be used to cause such vertical movement, if desired. Ball screw mechanism 324 rotates a threaded shaft 324a on which a threaded support block configuration 324b is captured and restrained from rotation with respect to shaft 324a and instead moves generally rectilinearly up and down along shaft 324a, as shown by arrow 324d in FIG. 5. Support block 324b is connected to a bracket 325 (FIG. 6), and yoke 320 is carried on bracket 325 for side to side, or lateral, movement, as shown by arrow 325a in FIG 6. Because support block 324b is connected to bracket 325, and yoke 320 is connected to bracket 325, yoke 320 moves vertically correspondingly with support block 324b and bracket 325.

As shown in FIG. 4A, in one example implementation, controls in upper section 208 may include one or more ball screw mechanisms 324 is connected to a right angle drive gear reducer 330, which is driven by a motor 334. Ball screw actuator 324c is powered by gear reducer 330 to rotate threaded shaft 324a of ball screw mechanism 324. Motor 334 is shown as being vertically disposed in FIG. 5, although it could be horizontally disposed or disposed at some other angle, if desired. Motor 334 may be powered via wiring, cabling, etc. carried in one or more platforms 202.

Controls included in upper section 208 may comprise one or more load cell arrangements, generally, 340 may be provided in compartment 316 that automatically determines a load placed on arm arrangement 210 and may include a load cell 344 and a pull plate 346 adjacent to load cell 344. Load cell arrangement 340 may be powered using wiring, cabling, etc. carried in one or more platforms 202.

Yoke 320 carries arm arrangement 210, which may include a generally L-shaped arm member 350 having ears 352 carried in receivers 354 in yoke 320. Arm member 350 may include a wing assembly connector, or, attachment portion 358 (FIG. 4B) configured for coupling with a corresponding and/or mating coupling (not shown) provided on wing 152. The coupling of attachment portion 358 with wing 152 (or other elongated structure) allows a portion of the weight and/or downward force of wing 152 to be borne by arm member 350, which in turn transmits the force through ball screw mechanism 324. The adjustability of upper section 308 towards and away from wing 152, via sliding table 214 (in the direction of arrow 214a is FIG. 4B) and the horizontal adjustability (via yoke 320 on bracket 325) and the vertical adjustability (via yoke 320 carried on support block 324b) of arm member 350 allows for a variety of degrees of freedom by which arm member 350 can be attached to wing 152, such as at spars (not shown) or other portions of wing 152.

Some implementations of apparatus and/or methods for supporting a wing assembly comprise at least two metrology devices. Metrology devices can provide positional information related to one or more arms 350 of the apparatus or system. In some implementations, metrology devices are attached to one or more arms. Any metrology device not inconsistent with the objectives of the present disclosure can be used. For example, metrology devices can comprise, consist, or consist essentially of one or more sensors operable to measure one or more of tilt motion, axial motion, radial motion, and face motion. In such configurations, metrology devices can measure and relay data corresponding to necessary positional changes of arms 350 to correct for deviations in arm 350 position from predetermined tolerances or values associated with a jigged position. Jigged positions comprise predetermined parameters, tolerances and values associated with particular assembly tasks to be carried out on an elongated component, such as a wing 152. Such deviations may occur, for example, during or after transport of an elongated component such as a wing 152. Necessary or desired positional changes of the arms 350 may be along one or more planes.

In certain example implementations, a control system, generally 204, may be placed in communication with at least two load cells 340 and/or at least two metrology devices (not shown) in an apparatus or system for supporting a wing assembly. The control system 204 can, in some cases, coordinate operation of and relay information provided by the load cells 340. Control systems 204 of this type can be configured to automatically operate elevator devices, such as a ball screw device 324, based on input from the load cells 340. Such operability can provide systems or apparatus comprising such control systems 204 with the ability to distribute or re-distribute load on the arms 350 of the apparatus or system. The control systems 204 can provide the ability for an apparatus or system for supporting a wing assembly with a mechanism for preventing imbalance of loads during transit or transport of elongated structures, such as a wing 152 when, for example, moving the wing assembly across a support surface. In some cases, the control system 204 can coordinate operation of and relay information provided by the metrology devices (not shown). Control systems 204 of this type can be configured to automatically operate elevator devices, such as a ball screw device 324, based on input from the metrology devices (not shown). Such operability can provide systems or apparatus comprising such control systems 204 with the ability to establish or reestablish a jigged position of the apparatus or system. The control systems 204 can provide the ability for an apparatus or system for supporting a wing assembly with a mechanism for preventing or correcting deviation from a jigged position during or after transit or transport of elongated structures, such as a wing 152 when, for example, moving the wing assembly across a support surface.

Control systems 204 for communication with at least two load cells 340 and/or at least two metrology devices (not shown) can have any configuration not inconsistent with the objectives of the present disclosure. For example, control systems 204 can comprise wired or wireless communication devices whereby load cells and/or metrology devices can relay data signals to the control systems. The control systems 204 may then parse and relay the data in various manners. In some cases, the control system can provide information to a user or operator who may then manually or automatically adjust the height of the arms in order to distribute or re-distribute load balance and/or to establish or reestablish a jigged position. Alternatively, the control system 204 can parse load cell 340 data or metrology data automatically and can distribute or re-distribute load and/or establish or reestablish a jigged position balance without further input from a user or operator by adjusting the elevator devices, such as a ball screw device 324, in along one or more planes. Adjustment of the elevator devices can occur incrementally, as over predetermined time intervals. In one non-limiting example, a control system 204 described herein can parse or display input in intervals of about 10 seconds. Further, such implementations can perform adjustments to distribute or re-distribute load or to establish or reestablish a jigged position in 10 second intervals. Alternatively, adjustment of the elevator devices can occur in real time as load balance and/or wing position shifts. For the purposes of the present disclosure, "real time" indicates that adjustment responses initiating distribution or re-distribution of loads or establishment or reestablishment of a jigged position occur on the order of less than about 1 second after detection of loads and/or positions outside of predetermined parameters for load balance and/or wing or arm position.

The control system 204 may be implemented or realized with a general purpose processor, a content addressable memory, a digital signal processor (DSP), an application specific integrated circuit (ASIC), a field programmable gate array (FPGA), any suitable programmable logic device, discrete gate or transistor logic, discrete hardware components or any combination thereof, designed to perform the functions described herein. In this manner, a control system may comprise, consist, or consist essentially of a microprocessor, a controller, a microcontroller, a state machine or the like. A processor may also be implemented as a combination of computing devices, e.g., a combination of a digital signal processor and a microprocessor, a plurality of microprocessors, one or more microprocessors in conjunction with a digital signal processor core or any other such configuration. In practice, the processor module may include processing logic configured to carry out the functions, techniques, and processing tasks associated with the operation of the control system 204.

In other exemplary aspects of the disclosure, configurations, systems, and methods for supporting aircraft wings and/or other elongated structures during manufacturing, maintenance, inspection, testing, and/or evaluation through use of a stanchion including an upper section of a generally predetermined or preselected and/or fixed height having an actuation system, controls, and a movable table in combination with a base section selected from a collection of base sections, each being of a different, predetermined height.

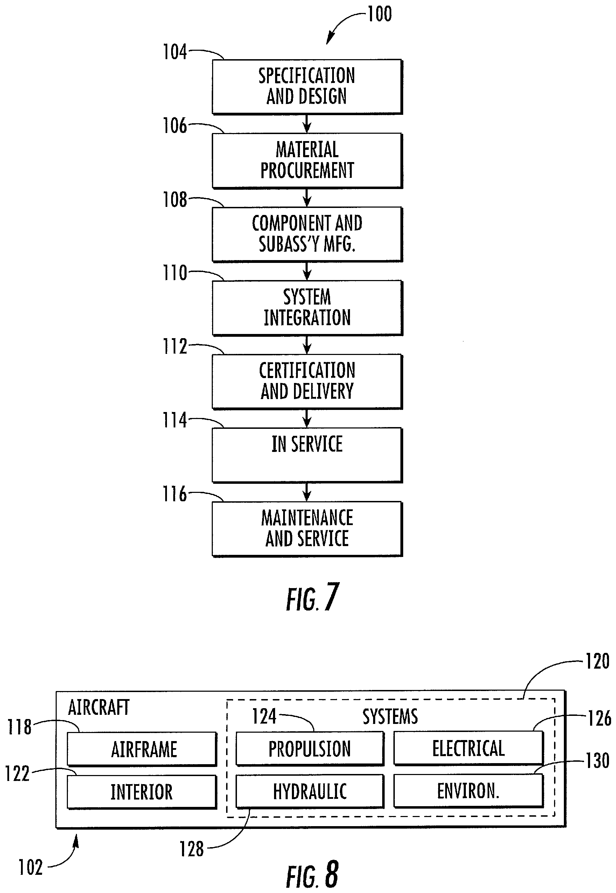

Examples of the present disclosure may be described in the context of an aircraft manufacturing and service method, generally depicted as 100, shown schematically in FIG. 7, and an aircraft, generally depicted as 102, shown schematically in FIG. 8, with the functions of service method 100 and construction of aircraft 102 being depicted as blocks and/or modules in such figures. During pre-production, exemplary method 100 may include specification and design 104 of the aircraft 102 and material procurement 106. During production, component and subassembly manufacturing 108 and system integration 110 of the aircraft 102 takes place. Thereafter, the aircraft 102 may go through certification and delivery 112 in order to be placed in service 114. While in service by a customer, the aircraft 102 is scheduled for routine maintenance and service 116 (which may also include modification, reconfiguration, refurbishment, and so on).

Each of the processes of method 100 may be performed or carried out by a system integrator, a third party, and/or an operator (e.g., a customer). For the purposes of this description, a system integrator may include, without limitation, any number of aircraft manufacturers and major-system subcontractors; a third party may include without limitation any number of venders, subcontractors, and suppliers; and an operator may be an airline, leasing company, military entity, service organization, and so on.

As shown in FIG. 8, the aircraft 102 produced by exemplary method 100 may include an airframe 118 with a plurality of systems 120 and an interior 122. Examples of high-level systems 120 include one or more of a propulsion system 124, an electrical system 126, a hydraulic system 128, and an environmental system 130. Any number of other systems may be included. Although an aerospace example is shown, the principles may be applied to other industries, such as the automotive industry.

Apparatus and methods embodied herein may be employed during any one or more of the stages of the production and service method 100. For example, components or subassemblies corresponding to the production process stage 108 may be fabricated or manufactured in a manner similar to components or subassemblies produced while the aircraft 102 is in service. Also, one or more apparatus examples, method examples, or a combination thereof may be utilized during the production stages 108 and 110, for example, by substantially expediting assembly of or reducing the cost of an aircraft 102. Similarly, one or more of apparatus examples, method examples, or a combination thereof may be utilized while the aircraft 102 is in service, for example and without limitation, for maintenance and service 116.

The present disclosure is applicable in the context of manufacturing an aircraft 102 and service method 100, and/or in other manufacturing sectors, such as the automotive sector, space sector, heavy industry sector, surface and submarine vessel maritime sector, etc.

Many modifications and other exemplary aspects of the disclosure set forth herein will come to mind to one skilled in the art to which this disclosure pertains, having the benefit of the teachings presented in the foregoing descriptions and the associated drawings. Therefore, it is to be understood that the disclosure is not to be limited to the specific examples disclosed and that modifications and other exemplary aspects of the disclosure are intended to be included within the scope of the appended claims. Moreover, although the foregoing descriptions and the associated drawings illustrate examples in the context of certain example combinations of elements and/or functions, it should be appreciated that different combinations of elements and/or functions may be provided by alternative examples without departing from the scope of the appended claims. For instance, different combinations of elements and/or functions than those explicitly described above are also contemplated as may be set forth in the appended claims. Although specific terms are employed herein, they are used in a generic and descriptive sense only and not for purposes of limitation.

## Claims

1. An apparatus for supporting a wing assembly (152) at a wing assembly support height relative to a support surface (154), the apparatus comprising:
at least one movable platform (202) having a first height;
a plurality of base sections (220), each having a different predetermined height with respect to one another;
a plurality of wing assembly support sections (208), wherein each wing assembly support section corresponds to a respective one of the base sections (220); and
a wing assembly connector (358) connected to each of the plurality of wing assembly support sections (208);
at least one wing assembly connector (358) being configured to be movable in a first plane and a second plane generally perpendicular with respect to the first plane;
each of the wing assembly support sections (208) defining a bottom and the wing assembly connector (358) being at a second height from the bottom;
at least one movable platform (202) and at least one wing assembly connector (358) being configured such that the aggregate of the first height and the second height is less than at least one of the wing assembly support heights and such that the difference between the aggregate of the first height and the second height and the wing assembly support height defines a differential height;
at least one of the multiple base sections (220) being of a predetermined height approximating the differential height;
the at least one of the base sections (220) being of a predetermined height approximating the differential height being carried on the movable platform (202);
at least one of the wing assembly support sections (208) carried on at least one of the multiple base sections (220) being of a predetermined height approximating the differential height;
at least two of the wing assembly connectors (358) each including an arm (350), and wherein the first plane is generally perpendicular to the support surface and the second plane is generally parallel to the support surface;
at least two of the wing assembly connectors (358) each having a respective load cell (340) connected thereto, each load cell being configured to automatically determine the load placed on one arm (350);
at least two of the wing assembly connectors (358) each having a respective metrology device connected thereto, each metrology device being configured to automatically determine positional data for one connector (358); and
a control system (204) in communication with each load cell (340) and each metrology device.

2. The apparatus of claim 1, wherein the arms (350) are each movable in a third plane that is generally parallel to the first plane and generally perpendicular to the second plane.

3. The apparatus of claim 1 or 2, further comprising at least one of:
an elevator device (324) connected to each of the at least two wing assembly connectors (358), the elevator devices being in communication with the control system (204), and the control system being operable to direct the elevator devices (358) to automatically move the arms (350) in the second plane;
the at least one movable platform (202) including a plurality of wheels (294) that permit the movable platform to move about the support surface;
a movable bracket (325) connected to the wing assembly connector (358) that allows the arm (350) to move in the third plane; and
at least one outrigger (250) connected to the at least one movable platform (202) that stabilizes the at least one movable platform (202).

4. The apparatus of claim 3, wherein the control system (204) is operable to automatically operate the elevator devices (324) to move the arms (350) in the second plane in a manner which serves to distribute or re-distribute load on the at least two arms (350).

5. The apparatus of any one of claims 1-3, further comprising:
the at least one movable platform (202) including a plurality of movable platforms; and
each of the plurality of movable platforms (202) including at least one clamp mechanism (266, 270) that selectively joins the plurality of movable platforms (202) to one another.

6. The apparatus of any one of claims 1-5, further comprising:
the at least one movable platform (202) including a plurality of movable platforms, each of the plurality of movable platforms including a first side and a second side generally opposite the first side;
at least one first clamp mechanism (266, 270) on the first side of each of the plurality of movable platforms (202);
at least one second clamp mechanism (266, 270) on the second side of each of the plurality of movable platforms (202); and
wherein, the first clamping mechanism and the second clamping mechanism cooperate with one another to selectively join the plurality of movable platforms (202) to one another.

7. The apparatus of any one of claims 1-6, further comprising:
the at least one movable platform (202) including a plurality of movable platforms, and each of the plurality of movable platforms including a front side and a rear side generally opposite the front side;
at least one male index mechanism (280) on the front side of each of the plurality of movable platforms; and
at least one female index mechanism (282) on the rear side of each of the plurality of movable platforms; and
wherein, the male index mechanism (280) and the female index mechanism (282) cooperate with one another to selectively register the plurality of movable platforms (202) to one another.

8. The apparatus of any one of claims 1-7, further comprising:
the at least one movable platform (202) defining a first side and a second side generally opposite the first side;
the first side and the second side each defining an opening (290);
a compartment (288) extending between the first side and the second side and communicating with the opening in each of the first side and the second side; and
a door pivotally attached to the movable platform for selectively allowing access to the compartment.

9. The apparatus of any one of claims 1-8, further comprising:
at least one wing assembly support section (208) defining a compartment (316); and
at least one access door (314) that is in communication with the compartment.

10. The apparatus of any one of claims 1-9, further comprising:
at least one wing assembly support section (208) including a movable table (214) interposed between the at least one wing assembly support section (208) and at least one of the base sections (220) being of a predetermined height approximating the differential height; and
the movable table (214) being configured to allow relative generally rectilinear movement between the at least one wing assembly support section (208) and the at least one base section (220) being of a predetermined height approximating the differential height.

11. The apparatus of any one of claims 1-10, further comprising:
the wing assembly connector (358) including an arm (350), and wherein the first plane is generally perpendicular to the support surface and the second plane is generally parallel to the support surface;
an elevator device (324) connected to wing assembly connector (358) that automatically moves the arm (350) in the second plane; and
a motor (334) connected to the elevator device (324) that powers the elevator device (324).

12. The apparatus of any one of claims 1-11, further comprising:
the at least one movable platform (202) including a plurality of movable platforms, and each of the plurality of movable platforms including at least one clamp mechanism (266, 270) that selectively joins the plurality of movable platforms to one another; and
the at least one movable platform (202) including a plurality of wheels (294) that permit the movable platform (202) to move about the support surface.

13. The apparatus of any one of claims 1-12, further comprising:
at least one wing assembly support section (208) including a movable table (214) interposed between the at least one wing assembly support section (208) and the at least one of the multiple base sections (220) being of a predetermined height approximating the differential height;
the movable table (214) being configured to allow relative generally rectilinear movement between the at least one wing assembly support section (208) and the at least one of the multiple base sections (220) being of a predetermined height approximating the differential height;
the wing assembly connector (208) including an arm (350), and wherein the first plane is generally perpendicular to the support surface and the second plane is generally parallel to the support surface; and
an elevator device (324) that automatically moves the arm (350) in the second plane.

14. A method for supporting a wing assembly (152) at a wing assembly support height relative to a support surface, the method comprising the steps of:
providing at least one wing assembly (152);
providing at least one movable platform (202) having a first height;
providing a plurality of base sections (220), each having a different predetermined height with respect to one another;
providing a plurality of wing assembly support sections (208) wherein each wing assembly support section (208) corresponds to a respective one of the base sections (220), and a wing assembly connector (208) movable in a first plane and a second plane generally perpendicular with respect to the first plane on each of the wing assembly support sections (208), the wing assembly support section defining a bottom and the wing assembly connector (358) being at a second height from the bottom;
providing each of at least two of the wing assembly connectors (358) with load cells (340) connected thereto, wherein each load cell (340) automatically determines load placed on one connector (358);
providing each of at least two of the wing assembly connectors (358) with metrology devices connected thereto, wherein each metrology device automatically determines positional data for one connector;
providing a control system (204) in communication with the load cells (340) and the metrology devices;
aggregating the first height of the movable platform (202) and the second height of the wing assembly connector (208) from the bottom of the wing assembly support section (208);
determining a differential height by comparing the aggregated first height and second height to the wing assembly support height;
selecting one of the multiple base sections (220) of a predetermined height approximating the differential height and positioning the selected one of the multiple base sections (220) upon the platform (202);
positioning the wing assembly support section (208) on top of the selected one of the multiple base sections (220); and
connecting the wing assembly connector (358) to the wing assembly (152) for supporting the wing assembly (152).

15. The method of claim 14, further comprising at least one of:
providing an elevator device (324) connected to each of the at least two wing assembly connectors (358), the elevator devices (324) being operable to automatically move the arms (350) in the second plane one or more planes;
moving the wing assembly (152) across the support surface (154);
adjusting the wing assembly connectors (358) along the second plane with the elevator devices (324) in order to distribute or re-distribute load on the connectors (358) as measured by the load cells (340); and
adjusting wing assembly connectors (358) along one or more planes with the elevator devices (324) in order to establish or re-establish a jigged position as measured by the metrology devices.

## Patentansprüche

1. Vorrichtung zum Stützen einer Flügelbaugruppe (152) auf einer Flügelbaugruppen-Stützhöhe relativ zu einer Stützfläche (154), wobei die Vorrichtung umfasst:
mindestens eine bewegliche Plattform (202) mit einer ersten Höhe;
eine Mehrzahl von Basisabschnitten (220), die jeweils eine unterschiedliche vorgegebene Höhe in Bezug aufeinander aufweisen;
eine Mehrzahl von Flügelbaugruppen-Stützabschnitten (208), wobei jeder Flügelbaugruppen-Stützabschnitt jeweils einem der Basisabschnitte (220) entspricht; und
einen Flügelbaugruppen-Verbinder (358), der mit jedem der Mehrzahl von Flügelbaugruppen-Stützabschnitten (208) verbunden ist;
wobei
mindestens ein Flügelbaugruppen-Verbinder (358) konfiguriert ist, um in einer ersten Ebene und einer zur ersten Ebene im Allgemeinen senkrechten zweiten Ebene beweglich zu sein;
jeder der Flügelbaugruppen-Stützabschnitte (208) eine Unterseite definiert, und der Flügelbaugruppen-Verbinder (358) sich auf einer von der Unterseite aus zweiten Höhe befindet;
mindestens eine bewegliche Plattform (202) und mindestens ein Flügelbaugruppen-Verbinder (358) so konfiguriert sind, dass das Aggregat der ersten Höhe und der zweiten Höhe kleiner als mindestens eine der Flügelbaugruppen-Stützhöhen ist, und der Unterschied zwischen dem Aggregat der ersten Höhe und der zweiten Höhe und der Flügelbaugruppen-Stützhöhe eine Differenzhöhe definiert;
mindestens einer der mehreren Basisabschnitte (220) eine vorgegebene Höhe aufweist, die die Differenzhöhe approximiert;
der mindestens eine der Basisabschnitte (220), der eine die Differenzhöhe approximierende vorgegebene Höhe aufweist, auf der beweglichen Plattform (202) getragen ist;
mindestens einer der auf mindestens einem der mehreren Basisabschnitte (220) getragenen Flügelbaugruppen-Stützabschnitte (208) eine vorgegebene Höhe aufweist, die die Differenzhöhe approximiert;
mindestens zwei der Flügelbaugruppen-Verbinder (358) jeweils einen Arm (350) aufweisen, und die erste Ebene im Allgemeinen senkrecht zur Stützfläche und die zweite Ebene im Allgemeinen parallel zur Stützfläche ist;
mindestens zwei der Flügelbaugruppen-Verbinder (358) jeweils mit einer Wägezelle (340) verbunden sind, wobei jede Wägezelle konfiguriert ist, um die auf einen Arm (350) aufgebrachte Last automatisch zu bestimmen;
mit jedem von mindestens zwei der Flügelbaugruppen-Verbinder (358) jeweils eine Messvorrichtung verbunden ist, wobei jede Messvorrichtung konfiguriert ist, um automatisch Positionsdaten für einen Verbinder (358) zu bestimmen; und
ein Steuersystem (204), das mit jeder Wägezelle (340) und jeder Messvorrichtung in Verbindung steht.

2. Vorrichtung nach Anspruch 1, bei der die Arme (350) jeweils in einer dritten Ebene beweglich sind, die im Allgemeinen parallel zur ersten Ebene und im Allgemeinen senkrecht zur zweiten Ebene verläuft.

3. Vorrichtung nach Anspruch 1 oder 2, ferner mit mindestens einem der Folgenden:
einer Hebevorrichtung (324), die mit jedem der mindestens zwei Flügelbaugruppen-Verbinder (358) verbunden ist, wobei die Hebevorrichtungen mit dem Steuersystem (204) in Verbindung stehen und das Steuersystem betreibbar ist, um die Hebevorrichtungen (358) anzuweisen, die Arme (350) in der zweiten Ebene automatisch zu bewegen;
wobei die mindestens eine bewegliche Plattform (202) eine Mehrzahl von Rädern (294) aufweist, die es der beweglichen Plattform ermöglichen, sich auf der Stützfläche zu bewegen;
einer beweglichen Halterung (325), die mit dem Verbinder (358) der Flügelbaugruppe verbunden ist und es dem Arm (350) ermöglicht, sich in der dritten Ebene zu bewegen; und
mindestens einem Ausleger (250), der mit der mindestens einen beweglichen Plattform (202) verbunden ist, der die mindestens eine bewegliche Plattform (202) stabilisiert.

4. Vorrichtung nach Anspruch 3, bei der das Steuersystem (204) betreibbar ist, um die Hebevorrichtungen (324) automatisch zu betreiben, um die Arme (350) in der zweiten Ebene in einer Weise zu bewegen, die dazu dient, die Last auf die mindestens zwei Arme (350) zu verteilen oder umzuverteilen.

5. Vorrichtung nach einem der Ansprüche 1-3, ferner mit:
der eine Mehrzahl von beweglichen Plattformen umfassenden beweglichen Plattform (202); wobei
jede der Mehrzahl von beweglichen Plattformen (202) mindestens einen Klemmmechanismus (266, 270) aufweist, der die Mehrzahl von beweglichen Plattformen (202) selektiv miteinander verbindet.

6. Vorrichtung nach einem der Ansprüche 1-5, ferner mit:
der eine Mehrzahl von beweglichen Plattformen umfassenden beweglichen Plattform (202), bei der jede der Mehrzahl von beweglichen Plattformen eine erste Seite und eine der ersten Seite allgemein gegenüberliegende zweite Seite aufweist;
mindestens einem ersten Klemmmechanismus (266, 270) auf der ersten Seite einer jeden der Mehrzahl von beweglichen Plattformen (202);
mindestens einem zweiten Klemmmechanismus (266, 270) auf der zweiten Seite jeder der Mehrzahl von beweglichen Plattformen (202); und
wobei der erste Klemmmechanismus und der zweite Klemmmechanismus miteinander zusammenwirken, um die Mehrzahl von beweglichen Plattformen (202) selektiv miteinander zu verbinden.

7. Vorrichtung nach einem der Ansprüche 1-6, ferner mit:
der mindestens einen eine Mehrzahl von beweglichen Plattformen beinhaltenden beweglichen Plattform (202), wobei jede der Mehrzahl von beweglichen Plattformen eine Vorderseite und eine Rückseite aufweist, die im Allgemeinen der Vorderseite gegenüberliegt;
mindestens einem Stiftindexmechanismus (280) auf der Vorderseite jeder der Mehrzahl von beweglichen Plattformen; und
mindestens einem Buchsenindexmechanismus (282) auf der Rückseite jeder der Mehrzahl von beweglichen Plattformen;
wobei der Stiftindexmechanismus (280) und der Buchsenindexmechanismus (282) miteinander zusammenwirken, um die Mehrzahl der beweglichen Plattformen (202) selektiv zueinander auszurichten.

8. Vorrichtung nach einem der Ansprüche 1-7, bei der ferner:
die mindestens eine bewegliche Plattform (202) eine erste Seite und eine zweite Seite definiert, die der ersten Seite im Allgemeinen gegenüberliegt;
wobei die erste Seite und die zweite Seite jeweils eine Öffnung (290) definieren;
eine Kammer (288) sich zwischen der ersten Seite und der zweiten Seite erstreckt und mit den Öffnungen in der ersten Seite und der zweiten Seite in Verbindung steht; und
eine Tür schwenkbar an der beweglichen Plattform befestigt ist, um selektiv den Zugang zu der Kammer zu ermöglichen.

9. Vorrichtung nach einem der Ansprüche 1-8, ferner mit:
mindestens einem Flügelbaugruppen-Stützabschnitt (208), der eine Kammer (316) definiert; und
mindestens einer Zugangstür (314), die mit der Kammer in Verbindung steht.

10. Vorrichtung nach einem der Ansprüche 1-9, ferner mit:
mindestens einen Flügelbaugruppen-Stützabschnitt (208), der einen beweglichen Tisch (214) umfasst, der zwischen dem mindestens einen Flügelbaugruppen-Stützabschnitt (208) und mindestens einem der Basisabschnitte (220) angeordnet ist, der eine die Differenzhöhe approximierende vorgegebene Höhe aufweist; und
bei der der bewegliche Tisch (214) konfiguriert ist, um eine allgemein geradlinige Relativbewegung zwischen dem mindestens einen Flügelbaugruppen-Stützabschnitt (208) und dem mindestens einen Basisabschnitt (220) zu ermöglichen, der die Differenzhöhe approximierende vorgegebene Höhe aufweist.

11. Vorrichtung nach einem der Ansprüche 1-10, bei der ferner:
der Flügelbaugruppen-Verbinder (358) einen Arm (350) aufweist, wobei die erste Ebene im Allgemeinen senkrecht zur Stützfläche und die zweite Ebene im Allgemeinen parallel zur Stützfläche ist;
eine Hebevorrichtung (324) mit dem Flügelbaugruppen-Verbinder (358) verbunden ist, der den Arm (350) automatisch in der zweiten Ebene bewegt; und
ein Motor (334) mit der Hebevorrichtung (324) verbunden ist, der die Hebevorrichtung (324) antreibt.

12. Vorrichtung nach einem der Ansprüche 1-11, bei der ferner:
die mindestens eine bewegliche Plattform (202) eine Mehrzahl von beweglichen Plattformen umfasst, und
jede der Mehrzahl von beweglichen Plattformen mindestens einen Klemmmechanismus (266, 270) aufweist, der die Mehrzahl von beweglichen Plattformen selektiv miteinander verbindet; und
die mindestens eine bewegliche Plattform (202) eine Mehrzahl von Rädern (294) aufweist, die es der beweglichen Plattform (202) ermöglichen, sich auf der Stützfläche zu bewegen.

13. Vorrichtung nach einem der Ansprüche 1-12, ferner mit:
mindestens einen Flügelbaugruppen-Stützabschnitt (208), der einen beweglichen Tisch (214) umfasst, der zwischen dem mindestens einen Flügelbaugruppen-Stützabschnitt (208) und dem mindestens einen der mehreren Basisabschnitte (220) angeordnet ist, der eine die Differenzhöhe approximierende vorbegebene Höhe aufweist;
wobei der bewegliche Tisch (214) konfiguriert ist, um eine allgemein geradlinige Relativbewegung zwischen dem mindestens einen Flügelbaugruppen-Stützabschnitt (208) und dem mindestens einen der mehreren Basisabschnitte (220) zu ermöglichen, die eine die Differenzhöhe approximierende vorbegebene Höhe aufweist;
wobei der Flügelbaugruppen-Verbinder (208) einen Arm (350) aufweist, wobei die erste Ebene im Allgemeinen senkrecht zur Stützfläche und die zweite Ebene im Allgemeinen parallel zur Stützfläche ist; und
einer Hebevorrichtung (324), die den Arm (350) in der zweiten Ebene automatisch bewegt.

14. Verfahren zum Stützen einer Flügelbaugruppe (152) auf einer Flügelbaugruppen-Stützhöhe relativ zu einer Stützfläche, wobei das Verfahren die folgenden Schritte umfasst:
Bereitstellen mindestens einer Flügelbaugruppe (152);
Bereitstellen mindestens einer beweglichen Plattform (202) mit einer ersten Höhe;
Bereitstellen einer Mehrzahl von Basisabschnitten (220), die jeweils eine unterschiedliche vorgegebene Höhe in Bezug aufeinander aufweisen;
Bereitstellen einer Mehrzahl von Flügelbaugruppen-Stützabschnitten (208), wobei jeder Flügelbaugruppen-Stützabschnitt (208) jeweils einem der Basisabschnitte (220) entspricht, und eines Flügelbaugruppen-Verbinders (208) an jedem der Flügelbaugruppen-Stützabschnitte (208), der in einer ersten Ebene und einer zu der ersten Ebene im Allgemeinen senkrechten zweiten Ebene beweglich ist, wobei der Flügelbaugruppen-Stützabschnitt einen Boden definiert und der Flügelbaugruppen-Verbinder (358) sich auf einer vom Boden aus zweiten Höhe befindet;
Versehen jedes von mindestens zwei der Flügelbaugruppen-Verbinder (358) mit damit verbundenen Wägezellen (340), wobei jede Wägezelle (340) automatisch die auf einen Verbinder (358) aufgebrachte Last bestimmt;
Versehen jedes von mindestens zwei der Flügelbaugruppen-Verbinder (358) mit daran angeschlossenen Messvorrichtungen, wobei jede Messvorrichtung automatisch Positionsdaten für einen Verbinder bestimmt;
Bereitstellen eines Steuerungssystems (204) in Verbindung mit den Wägezellen (340) und den Messvorrichtungen;
Aggregieren der ersten Höhe der beweglichen Plattform (202) und der zweiten Höhe des Flügelbaugruppen-Verbinders (208) der Flügelbaugruppe von der Unterseite des Flügelbaugruppen-Stützabschnitts (208) aus;
Bestimmen einer Differenzhöhe durch Vergleichen der aggregierten ersten Höhe und zweiten Höhe mit der Stützhöhe der Flügelbaugruppe;
Auswählen eines der mehreren Basisabschnitte (220) mit einer die Differenzhöhe approximierenden vorgegebenen Höhe und Positionieren des ausgewählten der mehreren Basisabschnitte (220) auf der Plattform (202);
Positionieren des Flügelbaugruppen-Stützabschnitts (208) auf dem ausgewählten der mehreren Basisabschnitte (220); und
Verbinden des Flügelbaugruppen-Verbinders (358) mit der Flügelbaugruppe (152), um die Flügelbaugruppe (152) zu stützen.

15. Verfahren nach Anspruch 14, ferner mit mindestens einem der folgenden Schritte:
Bereitstellen einer Hebevorrichtung (324), die mit jedem der mindestens zwei Flügelbaugruppen-Verbinder (358) verbunden ist, wobei die Hebevorrichtungen (324) betreibbar sind, um die Arme (350) in der zweiten Ebene automatisch um eine oder mehrere Ebenen zu bewegen;
Bewegen der Flügelbaugruppe (152) über die Stützfläche (154);
Einstellen der Flügelbaugruppen-Verbinder (358) entlang der zweiten Ebene mit den Hebevorrichtungen (324), um die durch die Wägezellen (340) gemessene Last auf die Verbinder (358) zu verteilen oder umzuverteilen; und
Einstellen von Flügelbaugruppen-Verbindern (358) entlang einer oder mehrerer Ebenen mit den Hebevorrichtungen (324), um eine von den Messvorrichtungen gemessene Einspannposition herzustellen oder wiederherzustellen.

## Revendications

1. Appareil pour supporter un ensemble d'aile (152) à une hauteur de support d'ensemble d'aile par rapport à une surface de support (154), l'appareil comprenant :
au moins une plateforme mobile (202) ayant une première hauteur ;
une pluralité de sections de base (220) ayant chacune une hauteur prédéterminée différente par rapport aux autres ;
une pluralité de sections de support d'ensemble d'aile (208), dans lequel chaque section de support d'ensemble d'aile correspond à une section respective des sections de base (220) ; et
un connecteur d'ensemble d'aile (358) raccordé à chacune de la pluralité de sections de support d'ensemble d'aile (208) ;
au moins un connecteur d'ensemble d'aile (358) étant configuré pour être mobile dans un premier plan et un deuxième plan généralement perpendiculaire par rapport au premier plan ;
chacune des sections de support d'ensemble d'aile (208) définissant un fond et le connecteur d'ensemble d'aile (358) étant à une seconde hauteur du fond ;
au moins une plateforme mobile (202) et au moins un connecteur d'ensemble d'aile (358) étant configurés de sorte que l'ensemble de la première hauteur et de la seconde hauteur est inférieur à au moins l'une des hauteurs de support d'ensemble d'aile et de sorte que la différence entre l'ensemble de la première hauteur et de la seconde hauteur et la hauteur de support d'ensemble d'aile définit une hauteur différentielle ;
au moins l'une de la pluralité de sections de base (220) étant d'une hauteur prédéterminée s'approchant de la hauteur différentielle ;
la au moins une des sections de base (220) qui est d'une hauteur prédéterminée s'approchant de la hauteur différentielle, étant portée sur la plateforme mobile (202) ;
au moins l'une des sections de support d'ensemble d'aile (208) portée sur au moins l'une de la pluralité de sections de base (220) étant d'une hauteur prédéterminée s'approchant de la hauteur différentielle ;
au moins deux des connecteurs d'ensemble d'aile (358) comprenant chacun un bras (350), et dans lequel le premier plan est généralement perpendiculaire à la surface de support et le deuxième plan est généralement parallèle à la surface de support ;
au moins deux des connecteurs d'ensemble d'aile (358) ayant chacun une cellule de charge (340) respective raccordée à ces derniers, chaque cellule de charge étant configurée pour déterminer automatiquement la charge placée sur un bras (350) ;
au moins deux des connecteurs d'ensemble d'aile (358) ayant chacun un dispositif de métrologie respectif raccordé à ces derniers, chaque dispositif de métrologie étant configuré pour déterminer automatiquement des données positionnelles pour un connecteur (358) ; et
un système de commande (204) en communication avec chaque cellule de charge (340) et chaque dispositif de métrologie.

2. Appareil selon la revendication 1, dans lequel les bras (350) sont chacun mobiles dans un troisième plan qui est généralement parallèle au premier plan et généralement perpendiculaire au deuxième plan.

3. Appareil selon la revendication 1 ou 2, comprenant en outre au moins l'un parmi :
un dispositif élévateur (324) raccordé à chacun des au moins deux connecteurs d'ensemble d'aile (358), les dispositifs élévateurs étant en communication avec le système de commande (204), et le système de commande pouvant fonctionner pour diriger les dispositifs élévateurs (358) afin de déplacer automatiquement les bras (350) dans le deuxième plan ;
la au moins une plateforme mobile (202) comprenant une pluralité de roues (294) qui permettent à la plateforme mobile de se déplacer autour de la surface de support ;
une console mobile (325) raccordée au connecteur d'ensemble d'aile (358) qui permet au bras (350) de se déplacer dans le troisième plan ; et
au moins un stabilisateur (250) raccordé à la au moins une plateforme mobile (202) qui stabilise la au moins une plateforme mobile (202).

4. Appareil selon la revendication 3, dans lequel le système de commande (204) peut fonctionner pour actionner automatiquement les dispositifs élévateurs (324) pour déplacer les bras (350) dans le deuxième plan d'une manière qui sert à répartir ou répartir à nouveau la charge sur les au moins deux bras (350).

5. Appareil selon l'une quelconque des revendications 1 à 3, comprenant en outre :
la au moins une plateforme mobile (202) comprenant une pluralité de plateformes mobiles ; et
chacune de la pluralité de plateformes mobiles (202) comprenant au moins un mécanisme de serrage (266, 270) qui assemble sélectivement la pluralité de plateformes mobiles (202) entre elles.

6. Appareil selon l'une quelconque des revendications 1 à 5, comprenant en outre :
la au moins une plateforme mobile (202) comprenant une pluralité de plateformes mobiles, chacune de la pluralité de plateformes mobiles comprenant un premier côté et un second côté généralement opposé au premier côté ;
au moins un premier mécanisme de serrage (266, 270) sur le premier côté de chacune de la pluralité de plateformes mobiles (202) ;
au moins un second mécanisme de serrage (266, 270) sur le second côté de la pluralité de plateformes mobiles (202) ; et
dans lequel, le premier mécanisme de serrage et le second mécanisme de serrage coopèrent entre eux pour assembler sélectivement la pluralité de plateformes mobiles (202) entre elles.

7. Appareil selon l'une quelconque des revendications 1 à 6, comprenant en outre :
la au moins une plateforme mobile (202) comprenant une pluralité de plateformes mobiles, et chacune de la pluralité de plateformes mobiles comprenant un côté avant et un côté arrière généralement opposé au côté avant ;
au moins un mécanisme d'indexation mâle (280) sur le côté avant de chacune de la pluralité de plateformes mobiles ; et
au moins un mécanisme d'indexation femelle (282) sur le côté arrière de chacune de la pluralité de plateformes mobiles ; et
dans lequel le mécanisme d'indexation mâle (280) et le mécanisme d'indexation femelle (282) coopèrent entre eux pour aligner sélectivement la pluralité de plateformes mobiles (202) entre elles.

8. Appareil selon l'une quelconque des revendications 1 à 7, comprenant en outre :
la au moins une plateforme mobile (202) définissant un premier côté et un second côté généralement opposé au premier côté ;
le premier côté et le second côté définissant chacun une ouverture (290) ;
un compartiment (288) s'étendant entre le premier côté et le second côté et communiquant avec l'ouverture dans chacun parmi le premier côté et le second côté ; et
une porte fixée de manière pivotante à la plateforme mobile pour permettre sélectivement l'accès au compartiment.

9. Appareil selon l'une quelconque des revendications 1 à 8, comprenant en outre :
au moins une section de support d'ensemble d'aile (208) définissant un compartiment (316) ; et
au moins une porte d'accès (314) qui est en communication avec le compartiment.

10. Appareil selon l'une quelconque des revendications 1 à 9, comprenant en outre :
au moins une section de support d'ensemble d'aile (208) comprenant une table mobile (214) intercalée entre la au moins une section de support d'ensemble d'aile (208) et au moins l'une des sections de base (220) qui a une hauteur prédéterminée s'approchant de la hauteur différentielle ; et
la table mobile (214) étant configurée pour permettre le déplacement généralement rectiligne relatif entre la au moins une section de support d'ensemble d'aile (208) et la au moins une section de base (220) qui est d'une hauteur prédéterminée s'approchant de la hauteur différentielle.

11. Appareil selon l'une quelconque des revendications 1 à 10, comprenant en outre :
le connecteur d'ensemble d'aile (358) comprenant un bras (350) et dans lequel le premier plan est généralement perpendiculaire à la surface de support et le deuxième plan est généralement parallèle à la surface de support ;
un dispositif élévateur (324) raccordé au connecteur d'ensemble d'aile (358) qui déplace automatiquement le bras (350) dans le deuxième plan ; et
un moteur (334) raccordé au dispositif élévateur (324) qui alimente le dispositif élévateur (324).

12. Appareil selon l'une quelconque des revendications 1 à 11, comprenant en outre :
la au moins une plateforme mobile (202) comprenant une pluralité de plateformes mobiles, et chacune de la pluralité de plateformes mobiles comprenant au moins un mécanisme de serrage (266, 270) qui assemble sélectivement la pluralité de plateformes mobiles entre elles ; et
la au moins une plateforme mobile (202) comprenant une pluralité de roues (294) qui permettent à la plateforme mobile (202) de se déplacer autour de la surface de support.

13. Appareil selon l'une quelconque des revendications 1 à 12, comprenant en outre :
au moins une section de support d'ensemble d'aile (208) comprenant une table mobile (214) intercalée entre la au moins une section de support d'ensemble d'aile (208) et la au moins une de la pluralité de sections de base (220) qui est d'une hauteur prédéterminée s'approchant de la hauteur différentielle ;
la table mobile (214) étant configurée pour permettre le déplacement généralement rectiligne relatif entre la au moins une section de support d'ensemble d'aile (208) et la au moins une section de la pluralité de sections de base (220) étant d'une hauteur prédéterminée s'approchant de la hauteur différentielle ;
le connecteur d'ensemble d'aile (208) comprenant un bras (350), et dans lequel le premier plan est généralement perpendiculaire à la surface de support et le deuxième plan est généralement parallèle à la surface de support ; et
un dispositif élévateur (324) qui déplace automatiquement le bras (350) dans le deuxième plan.

14. Procédé pour supporter un ensemble d'aile (152) à une hauteur de support d'ensemble d'aile par rapport à une surface de support, le procédé comprenant les étapes consistant à :
prévoir au moins un ensemble d'aile (152) ;
prévoir au moins une plateforme mobile (202) ayant une première hauteur ;
prévoir une pluralité de sections de base (220), chacune ayant une hauteur prédéterminée différente par rapport aux autres ;
prévoir une pluralité de sections de support d'ensemble d'aile (208), dans lequel chaque section de support d'ensemble d'aile (208) correspond à une section respective des sections de base (220), et un connecteur d'ensemble d'aile (208) mobile dans un premier plan et un deuxième plan généralement perpendiculaire par rapport au premier plan sur chacune des sections de support d'ensemble d'aile (208), la section de support d'ensemble d'aile définissant un fond et le connecteur d'ensemble d'aile (358) étant à une seconde hauteur par rapport au fond ;
prévoir chacun d'au moins deux des connecteurs d'ensemble d'aile (358) avec des cellules de charge (340) raccordées à ces derniers, dans lequel chacune cellule de charge (340) détermine automatiquement la charge placée sur un connecteur (358) ;
prévoir chacun d'au moins deux des connecteurs d'ensemble d'aile (358) avec des dispositifs de métrologie raccordés à ce dernier, dans lequel chaque dispositif de métrologie détermine automatiquement des données positionnelles pour un connecteur ;
prévoir un système de commande (204) en communication avec des cellules de charge (340) et les dispositifs de métrologie ;
regrouper la première hauteur de la plateforme mobile (202) et la seconde hauteur du connecteur d'ensemble d'aile (208) par rapport au fond de la section de support d'ensemble d'aile (208) ;
déterminer une hauteur différentielle en comparant la première hauteur et la seconde hauteur regroupées à la hauteur de support d'ensemble d'aile ;
sélectionner l'une de la pluralité de sections de base (220) d'une hauteur prédéterminée s'approchant de la hauteur différentielle et positionner la section sélectionnée de la pluralité de sections de base (220) sur la plateforme (202) ;
positionner la section de support d'ensemble d'aile (208) sur le dessus de la section sélectionnée de la pluralité de sections de base (220) ; et
raccorder le connecteur d'ensemble d'aile (358) à l'ensemble d'aile (152) pour supporter l'ensemble d'aile (152) .

15. Procédé selon la revendication 14, comprenant en outre au moins une étape parmi les étapes suivantes consistant à :
prévoir un dispositif élévateur (324) raccordé à chacun des au moins deux connecteurs d'ensemble d'aile (358), les dispositifs élévateurs (324) pouvant fonctionner pour déplacer automatiquement les bras (350) dans le deuxième plan, un ou plusieurs plans ;
déplacer l'ensemble d'aile (152) d'un côté à l'autre de la surface de support (154) ;
ajuster les connecteurs d'ensemble d'aile (358) le long du deuxième plan avec les dispositifs élévateurs (324) afin de répartir ou de répartir à nouveau la charge sur les connecteurs (358) telle que mesurée par les cellules de charge (340) ; et
ajuster les connecteurs d'ensemble d'aile (358) le long d'un ou de plusieurs plans avec les dispositifs élévateurs (324) afin d'établir ou d'établir à nouveau une position mobile telle que mesurée par les dispositifs de métrologie.
